# EUROPÄISCHE PATENTANMELDUNG

(11) **EP 2 865 617 A1**
(43) Veröffentlichungstag der Anmeldung: **29.04.2015**
(21) Anmeldenummer: 14181104.2
(22) Anmeldetag: 15.08.2014
(51) Int. Cl.: B65G 47/244, B65G 1/08

(54) **Vorrichtung zur Zwangspositionierung von einem Ladungsträger auf einer Rollenbahn**

(30) Priorität: 22.10.2013 DE 102013221392
(71) Anmelder: BITO-Lagertechnik Bittmann GmbH, 55590 Meisenheim (DE)
(72) Erfinder: Kemperdick, Arthur, 55758 Niederwörresbach (DE)
(74) Vertreter: Richardt Patentanwälte PartG mbB

(57) **Zusammenfassung**

Die Erfindung betrifft eine Vorrichtung zur Zwangspositionierung von einem Ladungsträger (108) auf einer Rollenbahn (100), wobei die Vorrichtung einen ersten (110) und einen zweiten Anschlag (112) aufweist, wobei der erste und der zweite Anschlag in Erstreckungsrichtung der Rollen (102) der Rollenbahn (100) gesehen diagonal zueinander versetzt an der Rollenbahn (100) anordenbar sind, wobei der erste und der zweite Anschlag jeweils eine zur Rollenbahn (100) hinweisende Abschrägung aufweist, wobei die Vorrichtung ferner einen Freigabemechanismus (114) aufweist, wobei der Freigabemechanismus (114) in Wirkverbindung mit dem zweiten Anschlag (112) zur Freigabe einer Bewegung des zweiten Anschlags (112) von einer ersten Position in eine zweite Position steht, wobei der Freigabemechanismus (114) dazu ausgebildet ist, bei einer Belastung des Freigabemechanismus (114) durch das den Ladungsträger (108) die Bewegung des zweiten Anschlags (112) von der ersten in die zweite Position freizugeben, wobei in der ersten Position der zweite Anschlag (112) fixiert ist und in der zweiten Position der zweite Anschlag (112) so weit von der Rollenbahn (100) wegbewegbar ist, dass eine Förderbewegung des Ladungsträgers (108) entlang des zweiten Anschlags (112) möglich ist.

## Beschreibung

Die Erfindung betrifft eine Vorrichtung zur Zwangspositionierung von einem Ladungsträger auf einer Rollenbahn sowie ein Verfahren zur Zwangspositionierung von einem Ladungsträger auf einer Rollenbahn.

Rollenbahnen sind aus dem Stand der Technik bekannt und dienen der Beförderung von Ladungsträgern. Rollenbahnen bestehen dabei aus einer Vielzahl hintereinander angeordneter drehbarer Rollen, wobei aufgrund des Schwungs der Ladungsträger, eines Antriebs der Rollen und/oder einer leicht abschüssigen Erstreckung der Rollenbahn ein "Gleiten" der Ladungsträger über die Rollen und damit eine Beförderung ermöglicht wird. Rollenbahnen sind auch unter dem Begriff des Rollenförderers bekannt.

Ladungsträger, wie beispielsweise Kisten, Kartons oder Paletten, können über die Rollenbahn transportiert werden, um dadurch von einem Ort zum anderen befördert zu werden.

Aus der DE 10 2010 012 407 A1 ist eine Vorrichtung zum Fördern von Produkten bekannt, welche eine Fördereinrichtung umfasst, die dazu dient, flächige Produktunterlagen nacheinander entlang einer Förderrichtung zu fördern. Aus der DE 28 48 820 ist eine Vorrichtung zum Drehen von rechteckigen Stückgütern bekannt. Auch die DE 100 43 991 A1 offenbart eine Vorrichtung zum Drehen flacher Gegenstände, insbesondere von Faltschachtelzuschnitten.

Demgegenüber liegt die Aufgabe zugrunde, eine Vorrichtung zur Zwangspositionierung von einem Ladungsträger auf einer Rollenbahn und ein Verfahren zur Zwangspositionierung von einem Ladungsträger auf einer Rollenbahn zu schaffen.

Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird eine Vorrichtung zur Zwangspositionierung von einem Ladungsträger auf einer Rollenbahn angegeben, wobei die Vorrichtung einen ersten und einen zweiten Anschlag aufweist, wobei der erste und der zweite Anschlag in Erstreckungsrichtung der Rollen der Rollenbahn gesehen diagonal zueinander versetzt an der Rollenbahn anordenbar sind. Der erste und der zweite Anschlag weisen jeweils eine zur Rollenbahn hinweisende Abschrägung auf. Die Vorrichtung umfasst ferner einen Freigabemechanismus, wobei der Freigabemechanismus in Wirkverbindung mit dem zweiten Anschlag zur Freigabe einer Bewegung des zweiten Anschlags von einer ersten Position in eine zweite Position steht, wobei der Freigabemechanismus dazu ausgebildet ist, bei einer Belastung des Freigabemechanismus durch den Ladungsträger die Bewegung des zweiten Anschlags von der ersten in die zweite Position freizugeben. In der ersten Position ist der Anschlag fixiert und in der zweiten Position ist der zweite Anschlag so weit von der Rollenbahn wegbewegbar, dass eine Förderbewegung des Ladungsträgers entlang des zweiten Anschlags möglich ist.

Ausführungsformen der Erfindung könnten den Vorteil haben, dass durch die Vorrichtung zur Zwangspositionierung ein Ladungsträger in einem vordefinierbaren Winkel auf der Rollenbahn zu liegen kommt. Dies ist z.B. unabhängig von dem Winkel, unter welchem der Ladungsträger beispielsweise unter Verwendung eines Gabelstaplers im Bereich der Vorrichtung abgesetzt wird.

Dies könnte sich insbesondere dann als nützlich erweisen, wenn es sich bei dem Ladungsträger um Paletten mit entsprechenden Kufen handelt. Werden diese Paletten mit ihrer Kufenerstreckungsrichtung parallel zur Erstreckungsrichtung der jeweiligen Rollen der Rollenbahn gefördert und befinden sich die Kufen der Palette und die Rollen in absolut paralleler Ausrichtung zueinander, so wird bezüglich einer einzelnen Kufe immer die Notwendigkeit bestehen, dass diese bei gegebenenfalls zu hoch angeordneter Rolle zunächst auf die Rolle auflaufen muss. Die Palette muss zum Beispiel damit so viel Schwung haben, dass das gesamte, auf dieser einzelnen Kufe lastende Gewicht auf einmal auf die etwas höher stehende Rolle aufgerollt werden kann. Im Falle dieses sogenannten geraden Durchlaufs befinden sich daher typischerweise grundsätzlich ein bis zwei Rollen unterhalb einer Kufe.

Durch die kontrollierte und vordefinierte Zwangspositionierung und Zwangsdrehung von dem Ladungsträger auf der Rollenbahn kann nun abgesichert werden, dass Ladungsträger, insbesondere Paletten mit ihren Kufen, niemals vollständig parallel über die Rollen gleiten. Beim Aufsetzen des Ladungsträgers auf die Vorrichtung zur Zwangspositionierung wird der Ladungsträger um einen vordefinierten Winkel gedreht, sodass anschließend der Ladungsträger, insbesondere die Palette mit ihrer Kufe, grundsätzlich schräg auf die Rollen aufläuft. Beim Auflaufen einer Kufe auf die Rollen wird also lediglich ein Bruchteil des Gesamtgewichts die entsprechende Kufenkante und damit die Rolle belasten. Dadurch gleitet diese Kufe auf eine selbst leicht nach oben stehende Rolle sehr leicht auf. Im Falle des schrägen Durchlaufs kann damit eine Kufe aufgrund der Schrägstellung von auch mehr als drei Förderrollen gleichzeitig getragen werden. Dadurch könnte insgesamt das Durchlaufverhalten des Ladungsträgers über die Rollen optimiert werden.

Nach einer Ausführungsform der Erfindung ist der zweite Anschlag in der ersten Position zur Zwangspositionierung des Stückguts fixiert, wobei in der zweiten Position der zweite Anschlag so weit von der Rollenbahn wegbewegbar ist, dass die Förderbewegung des zwangspositionierten Stückguts auf der Rollenbahn ohne eine weitere Drehbewegung des Stückguts entlang des zweiten Anschlags möglich ist. Dadurch könnte gewährleistet sein, dass nach Positionierung des Stückguts auf der Rollenbahn auch dieses Stückgut auf der Rollenbahn trotz der Zwangsdrehung nahezu ungehindert gleiten kann. Durch die vordefinierte Drehung des Stückguts wird der zum Durchlauf des Stückguts benötigte Platz (in paralleler Richtung zu den Rollen gesehen) grundsätzlich etwas höher sein, als dies der Fall wäre, wenn den Ladungsträger absolut parallel mit den Rollen auf der Rollenbahn transportiert werden würde.

Nach einer weiteren Ausführungsform der Erfindung handelt es sich bei der Wirkverbindung um eine Hebelverbindung zwischen dem Freigabemechanismus und dem zweiten Anschlag, wobei aufgrund der Hebelverbindung der zweite Anschlag in die zweite Position bewegbar ist. Durch die Verwendung einer Hebelverbindung könnte es möglich sein, auch bei einer massiven und schweren Ausgestaltung des zweiten Anschlags eine selbst im Falle leichtgewichtigen Stückguts einfache Beweglichkeit des zweiten Anschlags zu gewährleisten. Aufgrund der Hebelverbindung ist es damit nicht notwendig, entweder den zweiten Anschlag entweder sehr leichtgängig oder mit einem sehr schwachen Material zu versehen, damit auch ein geringes Gewicht eines Stückguts in der Lage ist, diesen zweiten Anschlag zu bewegen. Gegenteilig könnte es möglich sein, den zweiten Anschlag so massiv und stabil zu dimensionieren, dass er in der Lage ist, auch im Falle von sehr schwerem Stückgut eine zuverlässige und stabile Mechanik zu gewährleisten. Nichtsdestotrotz könnte der Hebel in der Lage sein, diese schwere Mechanik aufgrund der Hebelwirkung auch bei leichtgewichtigem Stückgut zu bedienen.

Nach einer Ausführungsform der Erfindung weist der zweite Anschlag einen Rastsitz auf, wobei der zweite Anschlag in die erste Position durch den Rastsitz fixiert ist und in der zweiten Position aus dem Rastsitz herausgehoben ist. Durch die Verwendung eines Rastsitzes ist es möglich, in mechanisch einfacher Weise eine Festlegung des zweiten Anschlags in zwei unterschiedlichen Positionen zu gewährleisten. Nichtsdestotrotz ist eine hohe mechanische Zuverlässigkeit aufgrund der Verwendung eines einfachen mechanischen Rastsitzes gegeben.

Nach einer Ausführungsform der Erfindung ist der zweite Anschlag aus dem Rastsitz aufgrund der Hebelverbindung heraushebbar. Beispielsweise weist die Vorrichtung eine Feder auf, wobei der zweite Anschlag gegen die Kraft der Feder aus dem Rastsitz heraushebbar ist. Die Verwendung einer Feder könnte insbesondere den Vorteil haben, dass die Bewegung des zweiten Anschlags zwischen der ersten und zweiten Position reversibel ist. Sobald den Ladungsträger im Freigabemechanismus nicht mehr belastet und/oder sobald den Ladungsträger vom zweiten Anschlag entfernt wurde, kann der zweite Anschlag automatisch durch die Feder von der zweiten Position in die erste Position zurückbewegt werden. Zu diesem Zweck steht vorzugsweise die Feder mit dem Freigabemechanismus in Wirkverbindung, wobei die Feder und der Freigabemechanismus so angeordnet sind, dass im unbelasteten Zustand des Freigabemechanismus der zweite Anschlag durch die Kraft der Feder in die erste Position zurückgedrängt wird.

Es sei an dieser Stelle angemerkt, dass Ausführungsformen der Erfindung auch so gestaltet sein können, dass der Freigabemechanismus und der zweite Anschlag so ausgebildet sind, dass nach Zwangspositionierung des Stückguts und Bewegung des zweiten Anschlags in die zweite Position den Ladungsträger beim Passieren des zweiten Anschlags durch Übergleiten der Rollen den zweiten Anschlag nicht mehr berührt. Der zweite Anschlag bietet in diesem Fall für das rollende Stückgut keinerlei Widerstand. Erst wenn der Ladungsträger den Freigabemechanismus verlassen hat, geht der zweite Anschlag von der zweiten Position in die erste Position selbstständig zurück.

Nach einer weiteren Ausführungsform der Erfindung sind die Hebelverbindung und der zweite Anschlag über eine Achse drehbar zueinander gelagert. Dadurch ist es möglich, einen weiteren Hebel zwischen der Achse und der Abschrägung des zweiten Anschlags zu realisieren. Insgesamt wird dadurch die Kraftübertragung auf den zweiten Anschlag weiter optimiert.

Nach einer weiteren Ausführungsform der Erfindung greift die Feder mit ihrem ersten Ende im Bereich der Achse an den zweiten Anschlag oder der Achse oder der Hebelverbindung zur Herstellung der Wirkverbindung zwischen der Feder und dem Freigabemechanismus an. Dies bildet den optimierten Angriffspunkt der Feder, welcher es ermöglicht, dass sowohl der Freigabemechanismus als auch der zweite Anschlag wieder in ihre Ursprungsposition zurückgeführt werden, nachdem der Ladungsträger den Freigabemechanismus passiert hat. Andere Angriffspunkte könnten die Herausforderung bieten, dass eine wesentlich stärker dimensionierte Feder hierfür erforderlich wäre. Dies ist jedoch wiederum kostenintensiver und materialintensiver.

Nach einer Ausführungsform der Erfindung greift die Feder mit ihrem zweiten Ende an der Rollenbahn an. Alternativ ist es auch möglich, dass die Vorrichtung ferner ein Rahmenelement umfasst, wobei der zweite Anschlag und der Freigabemechanismus über das Rahmenelement an der Rollenbahn anordenbar ist. In diesem Fall könnte die Feder auch mit ihrem zweiten Ende an dem Rahmenelement angreifen.

Nach einer Ausführungsform der Erfindung weist der Freigabemechanismus einen dritten Anschlag zur Aufnahme der Belastung des Freigabemechanismus durch den Ladungsträger auf. Vorzugsweise weist hierzu der dritte Anschlag eine Abschrägung auf, wobei die Abschrägung eine Verlängerung der Abschrägung des zweiten Anschlags in Richtung der Rollenbahn bildet. Dies konnte den Vorteil haben, dass beim Absetzen des Stückguts auf die Vorrichtung und damit die Abschrägung des zweiten Anschlags der Ladungsträger zunächst die Abschrägung des zweiten Anschlags hinunterrutscht, um daraufhin auf der Abschrägung des dritten Anschlags zu liegen zu kommen. Durch die Abschrägung des dritten Anschlags findet weiter eine Wegdrängung des Freigabemechanismus in Richtung des zweiten Anschlags statt. Über die Hebelverbindung kann daraufhin der zweite Anschlag aus seinem Rastsitz herausgehoben werden.

Nach einer Ausführungsform der Erfindung ist die Schräge so gewählt, dass durch die Aufnahme der durch das den Ladungsträger resultierenden Belastung über den Freigabemechanismus und die Hebelverbindung eine Kraft auf den zweiten Anschlag wirkt, wobei die Kraft ausreicht, um den zweiten Anschlag so weit von der Rollenbahn wegzubewegen, dass die Förderbewegung des Ladungsträgers entlang des zweiten Anschlags möglich ist. Vorzugsweise ist die Förderbewegung des Ladungsträgers entlang des zweiten Anschlags ohne Berührung des zweiten Anschlags durch den Ladungsträger möglich.

Nach einer weiteren Ausführungsform der Erfindung umfasst - wie bereits oben erwähnt - die Vorrichtung ferner ein Rahmenelement, wobei der zweite Anschlag und der Freigabemechanismus über das Rahmenelement an der Rollenbahn anordenbar sind. Vorzugsweise ist der zweite Anschlag über eine Kulissenführung an dem Rahmenelement beweglich angeordnet. Beispielsweise ist die bewegliche Lagerung des zweiten Anschlags ausgebildet, um eine Rotation des zweiten Anschlags um eine Achse parallel zur Erstreckungsrichtung der Rollenbahn und einer Bewegung des zweiten Anschlags in Richtung senkrecht zur Ebene der Rollenbahn zu ermöglichen. Damit kann unter minimalem Platzaufwand die Vorrichtung, insbesondere der zweite Anschlag, realisiert werden. Dies könnte insbesondere in Umgebungen relevant sein, in welchen der Platz für das Anbringen der Vorrichtung an einer bestehenden Rollenbahn stark begrenzt ist.

Nach einer Ausführungsform der Erfindung weist die Vorrichtung ferner ein längliches Führungselement an dem zweiten Anschlag oder dem Freigabemechanismus auf, wobei sich das Führungselement entgegen der Förderrichtung der Rollenbahn und vom ersten Anschlag wegweisend erstreckt. Die Verwendung eines solchen Führungselements könnte den Vorteil haben, dass hierdurch eine unterstützende Positionierungshilfe für den Ladungsträger bereitgestellt werden könnte. Es ist dadurch möglich, den Ladungsträger in wesentlich präziserer Weise in den vordefinierten Drehwinkel zu drehen.

In einem weiteren Aspekt betrifft die Erfindung ein Verfahren zur Zwangspositionierung von einem Ladungsträger auf einer Rollenbahn, wobei das Verfahren durch eine Positionierungsvorrichtung durchgeführt wird, wobei das Verfahren umfasst:
- Aufnahme des Ladungsträgers durch die Positionierungsvorrichtung, wobei bei der Aufnahme der Ladungsträger relativ zur Erstreckungsrichtung der Rollenbahn einen Anfangsdrehwinkel aufweist und
- Drehen des Ladungsträgers, wobei das Drehen so erfolgt, dass der Ladungsträger relativ zur Erstreckungsrichtung der Rollenbahn einen vordefinierten Winkel unabhängig von dem Anfangsdrehwinkel aufweist.

Eine entsprechende Positionierungsvorrichtung könnte die obig beschriebene Positionierungsvorrichtung sein. Es sind hier jedoch auch Alternativen möglich. Beispielsweise könnte eine elektronische Erfassung des Anfangsdrehwinkels erfolgen, woraufhin anschließend eine Berechnung stattfindet, um welchen Winkel dieser Anfangsdrehwinkel korrigiert werden muss, um den vordefinierten Winkel des Ladungsträgers zu erhalten. Daraufhin könnte unter Verwendung dieser Berechnung der Ladungsträger mittels verschiedenster Mechanismen in entsprechender Weise gedreht werden. Beispielsweise könnten an einander entgegengesetzten Enden des Ladungsträgers entsprechende Schieber angreifen, um dadurch den Ladungsträger in entsprechender Weise zu drehen.

Nach einer weiteren Ausführungsform der Erfindung erfolgt das Drehen des Ladungsträgers automatisch. Vorzugsweise erfolgt das Drehen des Ladungsträgers zwangsweise bei der Aufnahme des Ladungsträgers durch die Positionierungsvorrichtung.

Nach einer weiteren Ausführungsform der Erfindung umfasst das Verfahren ein Absetzen des Ladungsträgers und dadurch die Aufnahme des Ladungsträgers durch die Positionierungsvorrichtung, wobei das zwangsweise Drehen des Ladungsträgers aus dem Vorgang des Absetzens selbst resultiert. Der mechanische Vorgang des Absetzens initiiert also in Form einer daraus resultierenden unmittelbaren mechanischen Kraftübertragung das Drehen des Ladungsträgers.

Im Weiteren werden bevorzugte Ausführungsformen der Erfindung anhand der Zeichnungen näher erläutert. Es zeigen:
- Figur 1: eine perspektivische Ansicht einer Palette auf einer Rollenbahn,
- Figur 2: eine perspektivische Ansicht einer Palette auf einer Rollenbahn in einem weiterbewegten Zustand,
- Figur 3: eine perspektivische Ansicht eines Anschlags,
- Figur 4: eine Seitenansicht des Anschlags der Figur 3,
- Figur 5: eine Ansicht des Anschlags der Figur 3 von oben.

Im Folgenden werden einander ähnliche Elemente mit den gleichen Bezugszeichen gekennzeichnet.

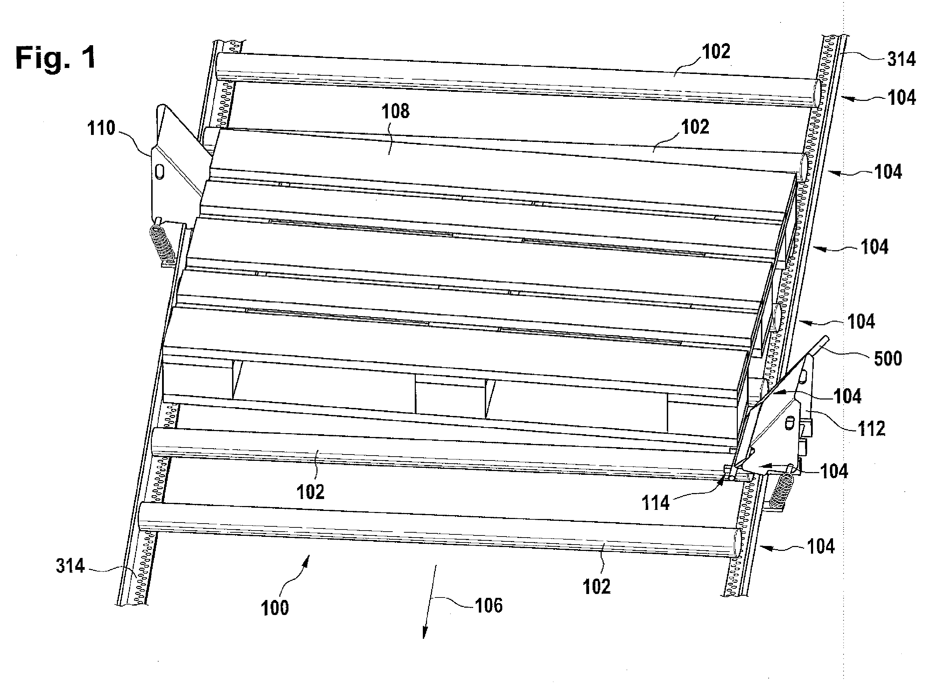

Die Figur 1 zeigt eine perspektivische Ansicht einer Rollenbahn 100, welche Rollen 102 aufweist, wobei auf den Rollen 102 eine Palette 108 oder allgemein ein Ladungsträger 108 befördert wird. Die Beförderungsrichtung ist mit Bezugszeichen 106 angegeben und resultiert beispielsweise auf einer kleinen Neigung der Rollenbahn 106, sodass schwerkraftbedingt die Palette 108 über die Rollenbahn 100 gleitet.

In Figur 1 ist der Übersicht halber lediglich eine einzelne Rolle 102 gezeigt, wobei jedoch z.B. an den mit Bezugszeichen 104 markierten Stellen typischerweise weitere Rollen an entsprechenden Rahmenverstrebungen 314 der Rollenbahn 100 befestigt sind. Vorzugsweise liegen die Rollen unmittelbar nebeneinander in geringem Abstand.

In der in Figur 1 gezeigten Position der Palette 108 sind die Kufen der Palette 108 nicht parallel zur Erstreckungsrichtung der Rollen 102. Dies ist das Ergebnis einer Zwangspositionierung durch eine Vorrichtung, welche aus einem ersten Anschlag 110 und einem zweiten Anschlag 112 besteht. Der erste Anschlag 110 und der zweite Anschlag 112 sind in Erstreckungsrichtung der Rollen der Rollenbahn 100 gesehen diagonal zueinander versetzt an der Rollenbahn 100 angeordnet. Beide Anschläge 110 und 112 weisen dabei eine Abschrägung auf, welche zur Rollenbahn hinweist.

Am zweiten Anschlag 112 ist außerdem ein Freigabemechanismus 114 ersichtlich, wobei der Freigabemechanismus in Wirkverbindung mit dem Anschlag 112 steht. Der Freigabemechanismus 114 ist dazu ausgebildet, bei einer Belastung des Freigabemechanismus, wie in Figur 1 gezeigt, durch die Palette den zweiten Anschlag 112 in eine Freigabeposition zu bewegen. In dieser Freigabeposition wird durch den Freigabemechanismus 114 der Anschlag 112 so weit aus der Bahn der Palette 108 gedrängt, dass beim Passieren der Palette 108 am Anschlag 112 keine Berührung zwischen Anschlag 112 und Palette 108 stattfindet.

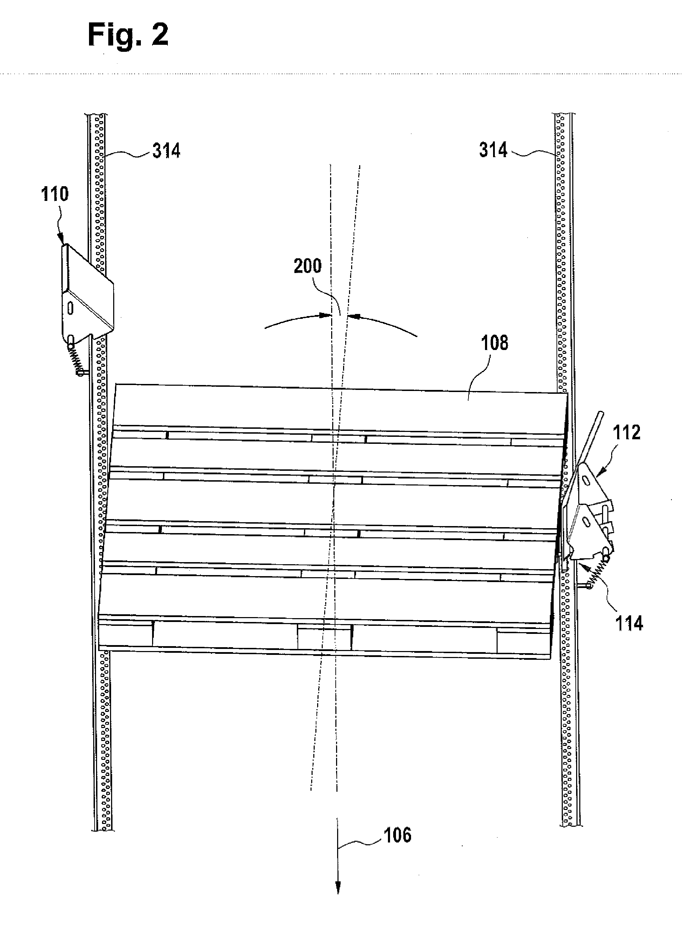

Dies ist exemplarisch in der Figur 2 gezeigt, welche einen Zustand zeigt, in welchem die Palette 108 zumindest teilweise den Anschlag 112 passierte. Wie deutlich in Figur 2 ersichtlich ist, ist die Palette 108 um einen Winkel 200 relativ zur Erstreckungsrichtung 106 und damit der Förderrichtung der Rollenbahn 100 gedreht. Durch diese leichte Drehung, welche beispielsweise im Bereich zwischen 5° und 7° liegen kann, wird verhindert, dass sich die Kufen der Palette 108 und die Rollen 102 in absolut paralleler Ausrichtung zueinander befinden. So ist gesichert, dass bezüglich einer einzelnen Kufe selbst im Falle einer etwas höher stehenden Rolle 102 nicht die gesamte Breite der Kufe gleichzeitig auf die Rolle 102 auflaufen muss. Gegenteilig kann bei der Drehung um den Winkel 200 gewährleistet werden, dass beim Auflaufen einer Kufe auf die Rolle 102 lediglich ein Bruchteil des Gesamtgewichts der Palette 108 die Kufenkante und damit die Rolle belastet. Dadurch gleitet die Kufe auf eine selbst leicht nach oben stehende Rolle 102 sehr leicht auf. Da vorzugsweise die Rollen 102 relativ dicht beieinanderstehen, wird im Falle des schrägen Durchlaufs eine Kufe grundsätzlich von mehr als zwei Förderrollen getragen. Gegenteilig wird im Falle des absolut parallelen Durchlaufs das Gesamtgewicht, welches auf einer Kufe lastet, von typischerweise nur zwei Rollen getragen werden.

Der Drehvorgang in dem Winkel 200 findet vollautomatisch und zwangsgeführt beim Absetzen der Palette 108 auf den Bereich der Vorrichtung und damit des Anschlags 110 und Anschlags 112 statt. Dies geschieht dadurch, dass beim Absetzen zunächst die Abschrägungen der Anschläge 110 und 112 für eine Zentrierung der Palette 108 auf der Rollenbahn 100 sorgen. Sobald jedoch beim Herunterrutschen der Kufen der Palette 108 entlang der Abschrägung der Anschlag 112 den Freigabemechanismus 114 berührt, wird der Freigabemechanismus 114 betätigt. Bis zu diesem Zeitpunkt der Betätigung erfolgt durch die diagonale Versetzung der Anschläge 110 und 112 die selbstständige vollautomatische Drehung der Palette. Sobald jedoch der Freigabemechanismus 114 betätigt wird, wird der Anschlag 112 aus dem Bewegungsbereich der Palette 108 wegbewegt, sodass die Palette 108 ungehindert in Förderrichtung den Anschlag 112 passieren kann.

Es sei an dieser Stelle angemerkt, dass es auch grundsätzlich möglich ist, dass durch den Freigabemechanismus lediglich eine Beweglichkeit des Anschlags von der Rollenbahn weg, das heißt in den Figuren 1 und 2 nach rechts gesehen, ermöglicht wird. Wenn in diesem Fall die Paletten 108 genügend Schwung haben, sind sie auch in der Lage, selbstständig beim Passieren des Anschlags den Anschlag 112 nach rechts wegzudrücken und damit den Anschlag 112 vollständig zu passieren. Dies könnte jedoch zu einer leichten Abbremsung der Paletten 108 führen.

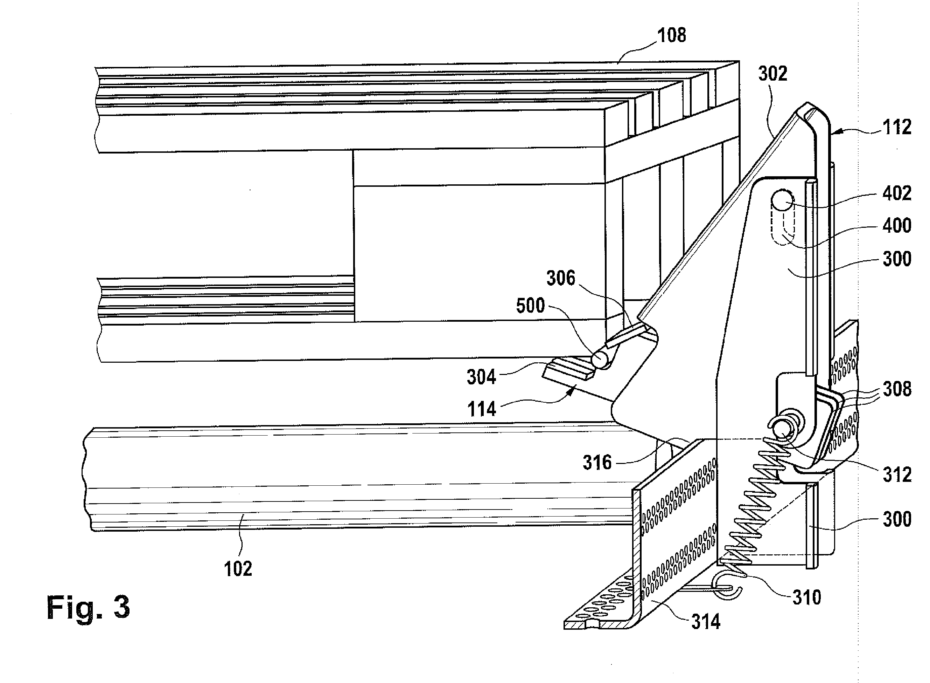

Die Figur 3 zeigt eine perspektivische Detailansicht des zweiten Anschlags 112 und des Freigabemechanismus 114. Deutlich sichtbar ist nun, dass der Anschlag 112 die Abschrägung 302 aufweist, welche in Richtung der Rolle 102 und damit der Rollenbahn zeigt. Beim Absetzen der Palette 108 mit ihren Kufen rutscht die Palette 108 entlang der Abschrägung 302 in Richtung der Rollenbahn.

Der Freigabemechanismus 114 und der Anschlag 112 stehen über eine Hebelverbindung 308 in Wirkverbindung. In dem in Figur 3 gezeigten Zustand befindet sich der Anschlag 112 gerade noch in der fixierten Position, in welchem der Anschlag 112 über einen Rastsitz 316 an der Rahmenverstrebung 314 der Rollenbahn 100 fixiert ist. Sobald jedoch die Kufen der Palette 108 auf den Freigabemechanismus 114 drücken, wird der Hebel 308 des Freigabemechanismus den Anschlag 112 nach oben drücken. Dadurch wird der Anschlag 112 aus seinem Rastsitz 316 herausgehoben und kann in der Figur 3 nach rechts schwenken.

Der Freigabemechanismus 114 umfasst eine Abschrägung 306 und eine Auflagefläche 304. Die Abschrägung 306 bildet dabei eine Verlängerung der Abschrägung 302. Die Auflagefläche 304 befindet sich unterhalb der Abschrägung 306.

Wenn die Palette 108 mit ihren Kufen entlang der Abschrägung 302 nach unten gerutscht ist, wird sie auf der Abschrägung 306 zu liegen kommen. Dadurch wird ein Bewegungsvorgang initiiert, indem die nun auf die Abschrägung 306 wirkende Kraft über den Hebel 308 auf den Anschlag 112 übertragen wird. Der Anschlag 112 und der Hebel 308 sind über eine Achse 112 drehbeweglich miteinander verbunden. Die Achse 312 ist dabei an einem Rahmenelement 300 gelagert, wobei das Rahmenelement 300 wiederum an der Verstrebung 314 fixiert ist.

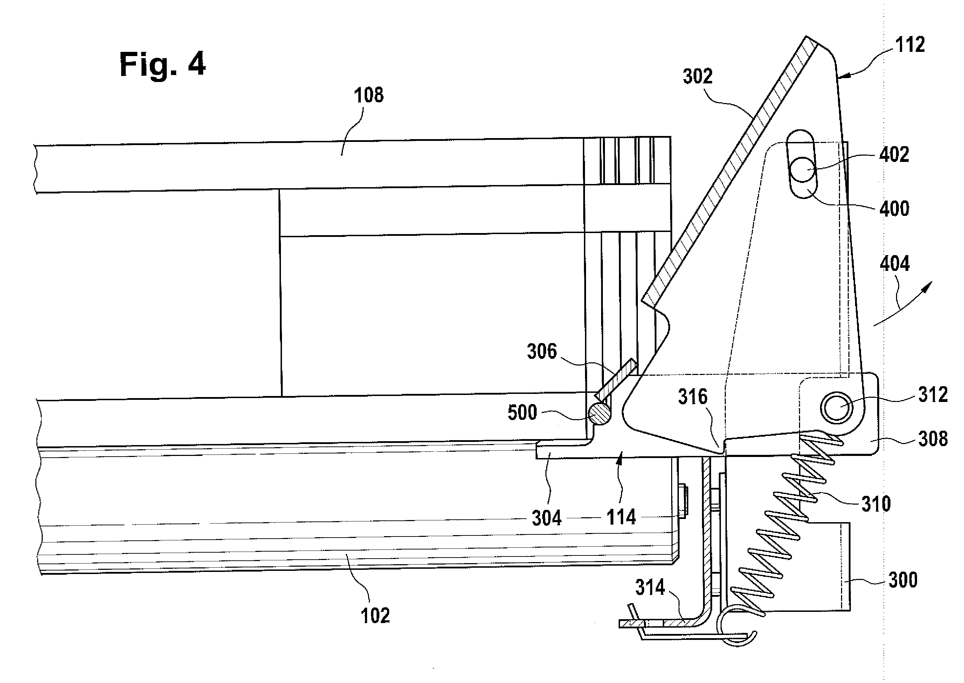

Wie nun in Figur 4 ersichtlich ist, wird im Rahmen des Positionierungsvorgangs die Palette 108 weiter entlang der Schräge 306 rutschen. Letztlich wird sie auf der Auflagefläche 304 zu liegen kommen, wobei in diesem Fall der Anschlag 112 vollständig aus seinem Rastsitz 316 herausgehoben ist. Bis dahin wird aufgrund der Schräge 306 und der Beweglichkeit des Anschlags 112 dieser Anschlag nach rechts, das heißt in Richtung 404, geschwenkt sein. Der Vorgang des Schwenkens in Richtung 404 und das Herausheben des Anschlags 112 aus dem Rastsitz 316 nach oben wird durch eine Kulissenführung, gebildet durch die Kulisse 400 und den Kulissenstein 402 geführt. Der Kulissenstein kann dabei beispielsweise am Anschlag 112 angeordnet sein, wohingegen die Kulisse 400 Teil des Rahmenelements 300 ist. Dies ist auch umgekehrt möglich.

Die Achse 312 ist über eine oder mehrere Federn 310 mit dem Rahmenelement 300 und/oder der Rahmenverstrebung 314 verbunden. Dadurch ist es möglich, dass nach Verlassen der Auflagefläche 304 durch die Palette und damit Entlastung des Freigabemechanismus 114 dieser wiederum selbstständig in die ursprüngliche Position, das heißt in Figur 3 gezeigte Position, zurückschnappt. Dadurch wird auch automatisch der Anschlag 112 in seine ursprüngliche Position zurückgeschwenkt.

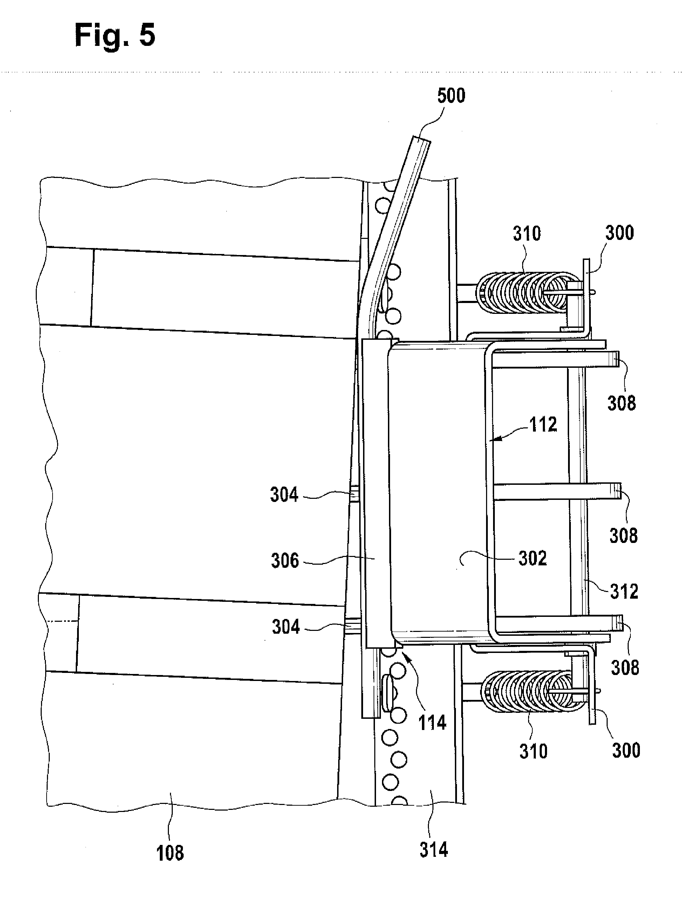

Die Figur 5 zeigt eine Sicht des Anschlags 112 (Figur 3) von oben. Deutlich ersichtlich ist hier nun der Hebelmechanismus 308, welcher aus verschiedenen Armen besteht, welche an dem Freigabemechanismus 114 angeordnet sind. Durch diese Arme hindurch ist die Achse 312 geführt, welche die Hebelverbindung 308 und den Anschlag 112 drehbar miteinander verbinden.

Ferner ersichtlich ist in Figur 5 ein längliches Führungselement 500, welches im vorliegenden Fall am Freigabemechanismus 114 angeordnet ist. Das Führungselement 500 erstreckt sich entgegen der Förderrichtung der Rollenbahn und vom ersten Anschlag 110 wegweisend. Wie in der Figur 5 erkannt werden kann, dient dieses Führungselement zur freien Positionierung und Führung der Palette 108 beim Passieren des Anschlags 112. Das Führungselement 500 kann auch am Anschlag 112 angeordnet sein.

### Bezugszeichenliste

- 100: Rollenbahn
- 102: Rolle
- 104: Position
- 106: Richtung
- 108: Palette
- 110: Anschlag
- 112: Anschlag
- 114: Freigabemechanismus
- 200: Winkel
- 300: Rahmenelement
- 302: Abschrägung
- 304: Auflagefläche
- 306: Abschrägung
- 308: Hebelverbindung
- 310: Feder
- 312: Achse
- 314: Rahmenverstrebung
- 316: Rastsitz
- 400: Kulisse
- 402: Kulissenstein
- 500: längliches Führungselement

## Patentansprüche

1. Vorrichtung zur Zwangspositionierung von einem Ladungsträger (108) auf einer Rollenbahn (100), wobei die Vorrichtung einen ersten (110) und einen zweiten Anschlag (112) aufweist, wobei der erste und der zweite Anschlag in Erstreckungsrichtung der Rollen (102) der Rollenbahn (100) gesehen diagonal zueinander versetzt an der Rollenbahn (100) anordenbar sind, wobei der erste und der zweite Anschlag jeweils eine zur Rollenbahn (100) hinweisende Abschrägung aufweist, wobei die Vorrichtung ferner einen Freigabemechanismus (114) aufweist, wobei der Freigabemechanismus (114) in Wirkverbindung mit dem zweiten Anschlag (112) zur Freigabe einer Bewegung des zweiten Anschlags (112) von einer ersten Position in eine zweite Position steht, wobei der Freigabemechanismus (114) dazu ausgebildet ist, bei einer Belastung des Freigabemechanismus (114) durch den Ladungsträger (108) die Bewegung des zweiten Anschlags (112) von der ersten in die zweite Position freizugeben, wobei in der ersten Position der zweite Anschlag (112) fixiert ist und in der zweiten Position der zweite Anschlag (112) so weit von der Rollenbahn (100) wegbewegbar ist, dass eine Förderbewegung des Ladungsträgers (108) entlang des zweiten Anschlags (112) möglich ist.

2. Vorrichtung nach Anspruch 1, wobei der zweite Anschlag (110) in der ersten Position zur Zwangspositionierung des Ladungsträgers fixiert ist, wobei in der zweiten Position der zweite Anschlag (110) so weit von der Rollenbahn (100) wegbewegbar ist, dass die Förderbewegung des zwangspositionierten Ladungsträgers (108) auf der Rollenbahn (100) ohne eine weitere Drehbewegung des Ladungsträgers (108) entlang des zweiten Anschlags (112) möglich ist.

3. Vorrichtung nach Anspruch 1 oder 2, wobei es sich bei der Wirkverbindung um eine Hebelverbindung (308) zwischen dem Freigabemechanismus (114) und dem zweiten Anschlag (112) handelt, wobei aufgrund der Hebelverbindung (308) der zweite Anschlag (112) in die zweite Position bewegbar ist.

4. Vorrichtung nach einem der vorigen Ansprüche, wobei der zweite Anschlag (112) einen Rastsitz aufweist, wobei der zweite Anschlag (112) in der ersten Position durch den Rastsitz fixiert ist und in der zweiten Position aus dem Rastsitz herausgehoben ist.

5. Vorrichtung nach Anspruch 4, wobei aufgrund der Hebelverbindung (308) der zweite Anschlag (112) aus dem Rastsitz heraushebbar ist.

6. Vorrichtung nach Anspruch 4 oder 5, ferner mit einer Feder (310), wobei der zweite Anschlag (112) gegen die Kraft der Feder (310) aus dem Rastsitz heraushebbar ist.

7. Vorrichtung nach Anspruch 6, wobei die Feder (310) mit dem Freigabemechanismus (114) in Wirkverbindung steht, wobei die Feder (310) und der Freigabemechanismus (114) so angeordnet sind, dass im unbelasteten Zustand des Freigabemechanismus (114) der zweite Anschlag (112) durch die Kraft der Feder (310) in die erste Position zurückgedrängt wird.

8. Vorrichtung nach einem der vorigen Ansprüche 3-7, wobei die Hebelverbindung (308) und der zweite Anschlag (112) über eine Achse (312) drehbar zueinander gelagert sind.

9. Vorrichtung nach Anspruch 8, wobei die Feder (310) mit ihrem ersten Ende im Bereich der Achse (312) an dem zweiten Anschlag (112) oder der Achse (312) oder der Hebelverbindung (308) zur Herstellung der Wirkverbindung zwischen der Feder (310) und dem Freigabemechanismus (114) angreift.

10. Vorrichtung nach Anspruch 9, wobei die Feder (310) mit ihrem zweiten Ende an der Rollenbahn (100) [oder dem Rahmenelement (300)] angreift.

11. Vorrichtung nach einem der vorigen Ansprüche, wobei der Freigabemechanismus (114) einen dritten Anschlag (304; 306) zur Aufnahme der Belastung des Freigabemechanismus (114) durch den Ladungsträger (108) aufweist.

12. Vorrichtung nach Anspruch 11, wobei der dritte Anschlag eine Abschrägung (306) aufweist und durch die Abschrägung eine Verlängerung der Abschrägung des zweiten Anschlags (112) in Richtung der Rollenbahn (100) bildet.

13. Vorrichtung nach einem der vorigen Ansprüche 11 oder 12, wobei die Schräge so gewählt ist, dass durch die Aufnahme der Belastung durch den Ladungsträger (108) eine Kraft auf den zweiten Anschlag (112) wirkt, wobei die Kraft ausreicht, um den zweiten Anschlag (112) so weit von der Rollenbahn (100) wegzubewegen, dass die Förderbewegung des Ladungsträgers entlang des zweiten Anschlags (112) möglich ist.

14. Vorrichtung nach einem der vorigen Ansprüche, ferner mit einem Rahmenelement (300), wobei der zweite Anschlag (112) und der Freigabemechanismus (114) über das Rahmenelement (300) an der Rollenbahn (100) anordenbar ist, wobei der zweite Anschlag (112) über eine Kulissenführung an dem Rahmenelement (300) beweglich gelagert ist.

15. Vorrichtung nach Anspruch 14, wobei die bewegliche Lagerung des zweiten Anschlags (112) ausgebildet ist, um eine Rotation des zweiten Anschlags (112) um eine Achse (312) parallel zur Erstreckungsrichtung der Rollenbahn (100) und eine Bewegung des zweiten Anschlags (112) in Richtung senkrecht zur Ebene der Rollenbahn (100) zu ermöglichen.

16. Vorrichtung nach einem der vorigen Ansprüche, ferner mit einem länglichen Führungselement an dem zweiten Anschlag (112) oder dem Freigabemechanismus (114), wobei sich das Führungselement entgegen der Förderrichtung der Rollenbahn (100) und vom ersten Anschlag (110) wegweisend erstreckt.

17. Verfahren zur Zwangspositionierung von einem Ladungsträger (108) auf einer Rollenbahn (100), wobei das Verfahren durch eine Positionierungsvorrichtung durchgeführt wird, wobei das Verfahren umfasst:
- Aufnahme des Ladungsträgers (108) durch die Positionierungsvorrichtung, wobei bei der Aufnahme der Ladungsträger (108) relativ zur Erstreckungsrichtung der Rollenbahn (100) einen Anfangsdrehwinkel aufweist,
- Drehen des Ladungsträgers, wobei das Drehen so erfolgt, dass der Ladungsträger (108) relativ zur Erstreckungsrichtung der Rollenbahn (100) einen vordefinierten Winkel (200) unabhängig von dem Anfangsdrehwinkel aufweist.

18. Verfahren nach Anspruch 17, wobei das Drehen des Ladungsträgers (108) automatisch erfolgt.

19. Verfahren nach Anspruch 18, wobei das Drehen des Ladungsträgers (108) zwangsweise bei der Aufnahme des Ladungsträgers (108) erfolgt.

20. Verfahren nach Anspruch 19, wobei das Verfahren ein Absetzen des Ladungsträgers (108) und dadurch die Aufnahme des Ladungsträgers durch die Positionierungsvorrichtung umfasst, wobei das zwangsweise Drehen des Ladungsträgers (108) unmittelbar aus dem Vorgang des Absetzens resultiert.
